Europäisches Patentamt

European Patent Office

Office européen des brevets

(19)

(11) Numéro de publication : **0 179 115**
**B1**

(12) **FASCICULE DE BREVET EUROPÉEN**

(45) Date de publication du fascicule du brevet :
**02.03.88**

(51) Int. Cl.⁴ : **C 25 C 3/22**

(21) Numéro de dépôt : **85902062.0**

(22) Date de dépôt : **02.05.85**

(86) Numéro de dépôt international :
**PCT/FR 85/00104**

(87) Numéro de publication internationale :
**WO/8505132 (21.11.85 Gazette 85/25)**

(54) **PROCEDE ET DISPOSITIF DE SURASPIRATION AUTOMATIQUE SUR LES CUVES D'ELECTROLYSE POUR LA PRODUCTION D'ALUMINIUM.**

(30) Priorité : **03.05.84 FR 8407521**

(43) Date de publication de la demande :
**30.04.86 Bulletin 86/18**

(45) Mention de la délivrance du brevet :
**02.03.88 Bulletin 88/09**

(84) Etats contractants désignés :
**AT CH DE FR IT LI NL SE**

(56) Documents cités :
**CH-A- 440 625**
**FR-A- 2 122 703**
**FR-A- 2 283 963**
**FR-A- 2 398 553**
**GB-A- 2 076 145**

(73) Titulaire : **ALUMINIUM PECHINEY**
**23, rue Balzac**
**F-75008 Paris Cédex 08 (FR)**

(72) Inventeur : **DUPRAT, Georges**
**Rue Florimont Truchet**
**F-73300 St. Jean De Maurienne (FR)**
Inventeur : **LANGON, Bernard**
**Rue Florimont Truchet**
**F-73300 St. Jean De Maurienne (FR)**
Inventeur : **SULMONT, Benoît**
**L'Echaillon**
**F-73300 St. Jean De Maurienne (FR)**

(74) Mandataire : **Pascaud, Claude et al**
**PECHINEY 28, rue de Bonnel**
**F-69433 Lyon Cedex 3 (FR)**

# 0 179 115

## Description

La présente invention concerne un procédé et un dispositif de mise en marche automatique d'une suraspiration. Elle est particulièrement adaptée au système de captage des effluents sur les cuves d'électrolyse pour la production d'aluminium.

L'aluminium est obtenu par électrolyse de l'alumine dissoute dans un bain cryolithaire. Le four d'électrolyse qui permet cette opération est généralement constitué par :

une cathode en carbone placée dans un caisson en acier et calorifugée par des réfractaires,

une anode ou une pluralité d'anodes en carbone plongeant dans le bain cryolithaire et oxydées régulièrement par l'oxygène de décomposition de l'alumine.

Le passage du courant s'effectue de haut en bas. Par effet Joule, la cryolithe est maintenue à l'état liquide, à une température proche de sa température de solidification. Les températures usuelles de marche des cuves sont comprises entre 930 et 980° C. L'aluminium produit est liquide et se dépose par gravité sur la cathode qui est étanche. Régulièrement, l'aluminium produit, ou une partie de l'aluminium produit, est aspiré par une poche de coulée et transvasé dans des fours d'élaboration de fonderie. Régulièrement, les anodes usées sont remplacées par des anodes neuves.

La tension de fonctionnement de ces électrolyseurs est généralement comprise entre 3,8 et 5 volts. La production journalière est proportionnelle à l'intensité traversant l'électrolyseur. Ceci a conduit à monter les électrolyseurs en série par 150 à 250 cuves, jusqu'à saturation en tension des sous-stations (700 à 1 000 V). Ceci a aussi conduit à augmenter l'intensité de marche en augmentant la taille des électrolyseurs.

Le bain des cuves est à base de cryolithe. Pour augmenter les rendements en courant de l'électrolyse, un certain nombre d'additifs sont utilisés.

Ils ont pour propriété d'abaisser la température de fusion du mélange, et/ou de diminuer la redissolution de l'aluminium dans le bain cryolithaire, et/ou d'améliorer la conductivité électrique du bain d'électrolyse. Ce sont par exemple, les fluorures de calcium, de magnésium, de lithium, d'aluminium.

En raison de la température élevée, le bain des cuves s'évapore progressivement et entraîne un double inconvénient :

les corps émis par le bain sont des fluorures gazeux ou particulaires. Emis en quantités trop élevées, ils sont considérés comme des polluants, qui peuvent causer des dommages dans l'environnement.

Les fluorures évaporés doivent être remplacés et cela constitue un poste de dépense important de l'exploitation des cuves d'électrolyse.

Il y a tout intérêt à capter ces effluents à l'origine des rejets, c'est-à-dire sur la cuve.

De nombreux systèmes de captage sont utilisés (voir par exemple FR-A-2283963). Ils assurent trois fonctions :

a) Le captage sur la cuve : il est réalisé par des panneaux manuels ou mécanisés, pouvant être ouverts lorsque l'exploitation de la cuve le demande (changement d'une anode usée, soutirage de l'aluminium produit).

b) Le transport des effluents fluorés : il est effectué dans des tuyauteries reliées à un ventilateur. Les cuves sont généralement branchées en parallèle sur un réseau commun de captage, l'équilibrage étant obtenu par un calcul aérodynamique initial des sections de chaque tuyauterie, ou par l'utilisation de diaphragmes ou de volets d'obturation réglable.

c) Le traitement des effluents : ceux-ci peuvent être lavés, traités par des filtres électrostatiques ou à manches, traités à sec, par fixation du fluor sur de l'alumine qui est ensuite introduite dans la cuve d'électrolyse.

Les rendements de captage obtenus atteignent 97 à 99 % sur les installations modernes.

Il est rapidement apparu à l'homme de l'art que le rendement de captage de tels systèmes était intimement lié au débit d'aspiration admis sur chaque cuve. Il est clair que le coût de l'investissement, et de l'exploitation ultérieure (énergie des ventilateurs, entretien des systèmes de traitement) sont croissants avec le débit d'aspiration. L'homme de l'art considère qu'il y a pratiquement proportionnalité entre les dépenses totales de captage des effluents et le débit d'aspiration moyen en $m^3$/seconde.

Les capots de fermeture des cuves ou les portes éventuelles, doivent être retirés (ou ouvertes, ou éclipsées) pour l'exploitation de la cuve, notamment pour le changement d'une anode usée ou le soutirage de l'aluminium liquide produit. La durée normale d'ouverture peut aller de quelques minutes à plusieurs dizaines de minutes. Pendant ce temps, pour maintenir un taux de captage élevé, le débit d'aspiration sur la cuve concernée devrait être augmenté. Le reste du temps, les capots étant correctement remis en place, de façon à assurer l'étanchéité convenable, le débit d'aspiration pourrait être abaissé sans nuire à l'efficacité du captage. Dans tout ce qui suit, nous désignerons par le terme de « capots » aussi bien les capots proprement dits que les portes d'accès à la cuve (porte de la zone de coulée par exemple).

Un double système d'aspiration doit permettre d'optimiser le rendement de l'installation de captage. L'installation est alors calculée par un débit moyen proche du minimum requis. Par un système de volet mu manuellement ou mécaniquement, le débit d'une cuve donnée est momentanément augmenté

2

chaque fois que l'exploitant est appelé à ouvrir un élément de capotage.

Un tel système manuel présente l'inconvénient d'être très contraignant et sujet à des oublis du personnel d'exploitation.

Si la suraspiration est maintenue sans raison sur un nombre trop important de cuves, le débit des autres risque de baisser excessivement si le débit total du système d'aspiration reste constant. Si la suraspiration n'est pas mise en marche au moment de l'ouverture d'une partie du capotage, des effluents fluorés sont lâchés dans la salle d'électrolyse.

La présente invention a pour but d'automatiser le passage du régime d'aspiration normal de la cuve dont tous les capots sont fermés à un régime momentané de suraspiration dès que l'on ouvre au moins un capot.

Il aurait été possible de prévoir, sur chaque capot, un contacteur électrique qui assure cette fonction. Mais sachant qu'une cuve moderne de 280 000 ampères comporte une quarantaine de capots et qu'une série peut comporter une centaine et jusqu'à deux cents cuves, cela impliquerait la pose de plusieurs milliers de contacteurs opérant dans l'environnement agressif de la cuve (température élevée, gaz corrosifs), dont la fiabilité aurait été douteuse, et le prix de revient relativement élevé.

La présente invention se base sur l'observation que si l'on mesure la température du flux gazeux entraîné, sur chaque cuve, par le système central d'aspiration, en un point convenablement choisi, on observe, dès l'ouverture d'au moins un capot, une baisse brutale de la température du flux gazeux, baisse qui peut atteindre 50 à 100° C, et qui peut donc, en toute sécurité, et par des moyens simples, peu onéreux et fiables, déclencher le régime de suraspiration puis le retour au régime normal d'aspiration lorsque le ou les capots ont été remis en place.

De façon plus précise, la présente invention est un procédé de passage automatique en régime de suraspiration des gaz émis par les cuves de séries de production d'aluminium par électrolyse ignée selon le procédé Hall-Héroult, chaque cuve étant close, sur sa périphérie, par une pluralité de capots amovibles, coulissants ou relevables, disposés en relation sensiblement étanche entre eux et entre chacun d'eux et leurs appuis sur la périphérie de la cuve, les gaz étant captés, sur chaque cuve, par un nombre $n$ de canalisations ($n$ pouvant varier de 1 à plus de 10) reliées à un système d'aspiration centralisé, caractérisé en ce que :

a) On mesure en permanence la température des gaz $t(i)$ dans chacune des $n$ canalisations $(i)$.

b) On compare chaque température $t(i)$ des gaz à une première valeur de consigne haute $t_1(i)$ inférieure à $t(i)$. Lorsque une — au moins — des températures mesurées devient égale ou inférieure à $t_1(i)$, ce qui correspond à l'ouverture d'au moins un capot de la cuve, ce franchissement du seuil $t_1(i)$ provoque le passage en suraspiration.

c) On continue à mesurer en permanence chaque température de gaz $t(i)$ dans chacune des $n$ canalisations $(i)$ et on la compare à une seconde valeur de consigne basse $t'_1(i)$ inférieure à $t_1(i)$. Lorsque toutes ses températures $t(i)$ mesurées deviennent supérieures à $t'_1(i)$, ce qui correspond au retour à la situation de cuve close, le franchissement du seuil $t'_1(i)$ provoque le retour au régime d'aspiration normale.

Ces seuils sont essentiellement fonction du débit d'aspiration et un moyen simple et automatique de réglage de ces seuils est de les rendre fonction de la température moyenne des gaz aspirés. Cette moyenne est soit calculée à partir des mesures des $n$ canalisations, soit mesurée au niveau du collecteur général. On a ainsi un réglage automatique des seuils, quel que soit le débit d'aspiration. Le dispositif ne demande alors aucune intervention.

L'invention concerne également un dispositif pour la mise en œuvre du procédé de passage automatique en suraspiration des gaz, caractérisé en ce qu'il comporte :

un moyen de mesure de la température des gaz $t(i)$ dans chaque canalisation $(i)$,

un moyen de comparaison de $t(i)$ à un premier seuil $t_1(i)$ et à un second seuil $t'_1(i)$,

un moyen de mise en route automatique de la suraspiration,

un moyen d'arrêt automatique de la suraspiration lorsque l'ensemble des $t(i)$ redevient égal ou supérieur à $t'_1(i)$,

et un moyen de contrôle du débit gazeux dans la canalisation de chaque cuve,

un moyen de fixation des valeurs des seuils $t_1(i)$ et $t'_1(i)$.

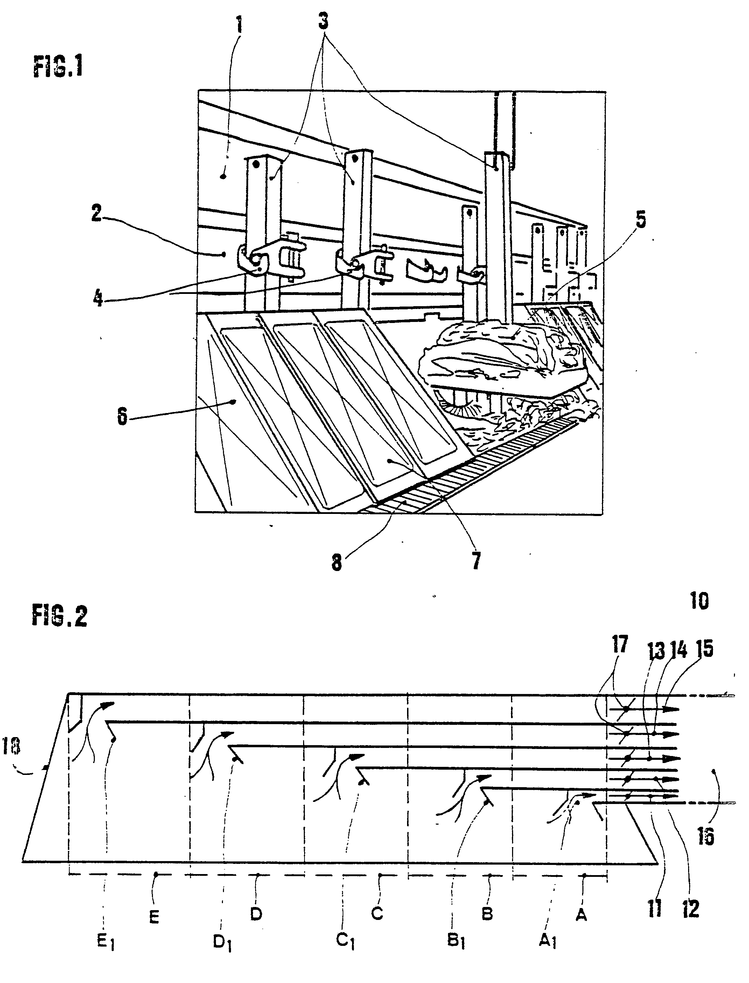

Les figures 1 et 2 illustrent la mise en œuvre de l'invention.

La figure 1 montre une vue latérale partielle d'une cuve d'électrolyse moderne à 280 000 ampères, technique Pechiney, dont deux capots ont été enlevés pour permettre l'échange d'une anode usée.

La figure 2 montre une coupe verticale schématisée des différents circuits d'aspiration d'une cuve à 280 000 ampères.

La cuve d'électrolyse comporte une poutre horizontale (1) qui forme la superstructure de la cuve et qui supporte les trémies d'alimentation en alumine (non représentées), la barre anodique (positive) (2), les tiges-supports d'anodes (3), qui sont verrouillées sur la barre anodique (2), par les dispositifs (4). L'anode usée (5) a été enlevée après ouverture de deux capots (7) — un seul est visible — qui ont été posés de part et d'autre de l'ouverture, sur les autres capots fermés (6). La grille (8) qui communique avec le sous-sol, constitue une arrivée d'air frais dans la zone de travail.

Sur la figure 2, qui est réduite aux éléments essentiels pour la compréhension de l'invention, la cuve est divisée en 5 zones d'aspiration, numérotées A à E, qui correspondent à la largeur de 2 capots, chaque zone possède son propre conduit d'aspiration A1, B1, C1, D1, E1, dont les dimensions sont déterminées de façon à assurer dans chacun d'eux un débit prédéterminé, en rapport avec la géométrie de la cuve.

Les cinq gaines A1, B1, C1, D1, E1 sont réunies dans le collecteur général de cuve (10) relié au dispositif central d'aspiration non représenté.

Dans le cas particulier représenté, des thermocouples ont été disposés à la sortie de chaque gaine, en (11, 12, 13, 14, 15) avant leur réunion dans le collecteur général. Ces thermocouples sont, par exemple, du type nickel-chrome + nickel allié, à structure coaxiale, qui ont une sensibilité relativement élevée et une excellente résistance aux gaz fluorés émis par la cuve.

On a relevé la température moyenne stabilisée sur ces différents thermocouples, à débit normal :

a) Tous les capots étant fermés, y compris la porte (18) disposée sur la tête de la cuve, donnant accès au point de prélèvement de l'aluminium liquide (porte de coulée).

b) Ouverture d'un capot situé successivement dans l'une des zones A à E définies sur la figure 2 et de la porte de coulée.

On a obtenu les résultats suivants :

| Température des thermocouples t, en °C, et variations mesurées, △ t °C | | | | | |
|---|---|---|---|---|---|
| Capots et portes fermés | 175 | 170 | 150 | 130 | 175 |
| Zone A ouverte   t | 80 | 100 | 130 | 150 | 130 |
|   △ t | -95 | - 70 | - 20 | + 20 | - 45 |
| Zone B ouverte   t | 140 | 75 | 100 | 130 | 130 |
|   △ t | -35 | - 95 | - 50 | 0 | - 45 |
| Zone C ouverte   t | 150 | 125 | 70 | 120 | 120 |
|   △ t | -25 | - 45 | - 80 | - 10 | - 55 |
| Zone D ouverte   t | 200 | 150 | 100 | 75 | 120 |
|   △ t | +25 | - 20 | - 50 | - 55 | - 55 |
| Zone E ouverte   t | 220 | 170 | 120 | 70 | 80 |
|   △ t | +45 | 0 | - 30 | - 60 | - 95 |
| Porte de coulée ouverte   t | 230 | 180 | 150 | 70 | 55 |
|   △ t | +55 | + 10 | 0 | - 60 | -120 |

On constate que l'ouverture d'un capot quelconque provoque, sur l'un au moins des points où sont disposés les thermocouples, une baisse de température du flux d'air supérieure à 50° C et ce, avec un temps de réponse de quelques secondes. C'est largement suffisant pour générer avec une fiabilité totale, un signal électrique qui déclenchera le passage en suraspiration.

Une façon particulièrement simple et efficace, pour passer en suraspiration, consiste à munir chaque gaine d'un volet mobile (17) ou d'un diaphragme, commandé par un vérin, qui en position normale assure un débit de N mètres cubes par minute, et, en position complètement ouverte, un débit de X × N mètres cubes par minute, X étant le plus généralement compris entre 1,2 et 4 et, de préférence, entre 1,5 et 3.

Le volet mobile peut être, par exemple, constitué par une plaque pleine, mobile autour d'un axe plus ou moins incliné par rapport à la direction du flux gazeux, selon le débit désiré, ou encore il peut être constitué par une plaque coulissante, pleine ou perforée, obturant un pourcentage donné de la section de la canalisation, et s'effaçant plus ou moins en suraspiration.

Une commande proportionnelle de l'ouverture, en fonction du nombre de volets ouverts, est également possible par des moyens connus.

Dans les différents cas, la commande est assurée par de petits vérins qui opèrent à l'extérieur de la cuve et de ses canalisations, donc sans risque important de corrosion.

Le contrôle de débit de gaz peut également être commandé par étranglement — et desserrement — d'une portion de la canalisation, réalisée en un matériau souple, résistant à la température et aux

4

composants fluorés, tels que les élastomères d'Hypalon ou de Teflon (marques déposées). L'étranglement est réalisé soit mécaniquement soit par action d'un fluide hydraulique dans une double enveloppe enserrant la portion souple de la canalisation (vannes connues sous la marque déposée « Dosapro »).

Dans le cas de cuves d'électrolyse de dimensions inférieures, ne possédant qu'un circuit unique d'aspiration, la mesure de température peut être effectuée à la sortie du circuit d'aspiration, correspondant au point 16 de la figure 2. Dans un tel cas, la baisse de température du flux gazeux à l'ouverture d'un capot peut ne pas atteindre 50° C, mais elle reste au moins égale à 20° C et, dans tous les cas, largement suffisante pour assurer, en toute fiabilité, le déclenchement de la suraspiration. Il est d'ailleurs possible, comme on l'a constaté expérimentalement, dans le cas de cuves à 280 KA, d'effectuer la mesure de température en un seul point (en 16), en plaçant le thermocouple après la zone de convergence des cinq flux gazeux provenant des cinq circuits de captage. La sensibilité est diminuée mais elle reste largement suffisante pour la mise en œuvre du procédé.

A la remise en place du ou des capots enlevés, la température remonte rapidement jusqu'à une valeur qui n'est pas toujours égale — du moins dans les premières secondes — à sa valeur initiale avant ouverture du ou des capots. Mais là encore, l'augmentation est suffisamment rapide (quelques secondes) et d'une amplitude suffisante pour fournir le signal de retour au régime d'aspiration normal.

L'homme de l'art pourra donc par l'expérience, et en fonction de la dimension des cuves et des particularités des circuits d'aspiration, déterminer un premier seuil de température $t_1$ à la baisse (passage en suraspiration) et un second seuil de température $t'_1$ à la hausse (retour en aspiration normale), ces deux seuils pouvant être égaux ou différents.

Dans le cas du tableau 1, le seuil de déclenchement de la suraspiration pourrait être fixé à 100° C et le seuil de retour en aspiration normale à 70 ou 80° C.

Les techniques modernes de traitement du signal permettent de perfectionner à peu de frais le système exposé ci-dessus :

On constate en effet que l'ouverture ou la fermeture d'un capot se traduit par une variation rapide de la température mesurée dans au moins une des gaines de captations. Cette variation de température atteint plusieurs degrés par seconde.

De telles variations, importantes et rapides, ne se produisent pas en régime permanent (aspiration normale, capots fermés ou suraspiration avec au moins un capot ouvert).

On peut donc utiliser le signal dérivé $dT/dt$ pour commander le déclenchement ou l'arrêt de la suraspiration.

Outre le déclenchement de la suraspiration, le procédé, objet de l'invention, peut remplir un certain nombre de fonctions liées à l'exploitation des cuves d'électrolyse modernes à grande puissance. Le franchissement des seuils $t_1(i)$ et $t'_1(i)$ peut, outre la commande de la suraspiration, déclencher l'allumage d'un témoin lumineux (et/ou sonore) sur un tableau centralisé par groupe de cuves, et indiquer ainsi si un capot au moins est ouvert (ou est resté ouvert) sur une cuve donnée, et combien de capots sont ouverts sur un groupe de cuves données. Par exemple, dans une série de 150 cuves, dont l'aspiration est répartie sur cinq groupes de 30, on constate que, au-delà de 4 capots ouverts simultanément sur un même groupe, l'aspiration — commutée en suraspiration — commence à être insuffisante. On peut alors déclencher une alarme pour informer le personnel de service qu'il faut attendre avant d'ouvrir un cinquième (ou n-ième capot).

On peut, de la même façon, détecter l'emplacement d'un capot mal refermé ou oublié en position ouverte.

Au total, on peut gérer, dans une commande centralisée, le nombre et la durée des ouvertures et fermetures de capots. Le signal résultant du franchissement des seuils $t_1(i)$ et $t'_1(i)$ est envoyé sur un calculateur de contrôle du procédé qui génère et peut éditer des informations concernant le bilan, les alarmes, les différents calculs liés au procédé.

Avantages procurés par l'invention

La mise en œuvre de l'invention présente de nombreux avantages que l'on peut résumer comme suit :

Economie d'énergie sur la consommation du système d'aspiration. Un système classique, à aspiration constante de 3 m³/s/par cuve, consomme environ 300 kWh par tonne d'aluminium produit, soit une fraction non négligeable des 12 500 à 13 500 que requiert l'électrolyse. Par la mise en œuvre de l'invention, on peut réduire le débit d'aspiration à 2 m³ par seconde et par cuve, avec des pointes, en suraspiration à 3 m³/s pendant environ 5 % du temps. L'économie peut atteindre 60 à 90 kWh/tonne d'Al.

Plus grande efficacité du captage, qui est ainsi optimisé selon les ouvertures de capots.

Baisse corrélative des rejets fluorés non captés.

Suppression du risque de capots oubliés en position ouverte, donc soulagement des tâches du personnel.

Simplicité et robustesse du dispositif et, corrélativement, faible coût d'investissement.

Possibilité d'établir un bilan thermique de la cuve : on connaît maintenant le débit des gaz et leur température, il est facile d'en réduire la puissance thermique entraînée par les gaz.

Enfin, comme on l'a déjà signalé, possibilité de gérer les ouvertures et fermetures de capot sans aucun dispositif mécanique ou électromécanique lié aux capots eux-mêmes, donc avec une grande fiabilité.

**Revendications**

1. Procédé de passage automatique en régime de suraspiration des gaz émis par les cuves des séries de production d'aluminium par électrolyse ignée selon le procédé Hall-Héroult, chaque cuve étant close, sur sa périphérie, par une pluralité de capots amovibles disposés en relation sensiblement étanche entre eux, et entre chacun d'eux et leurs appuis sur la périphérie de la cuve, les gaz étant captés, sur chaque cuve, par au moins une canalisation reliée à un système d'aspiration centralisé, caractérisé en ce que :

a) On mesure en permanence la température des gaz $t(i)$ dans chacune des n canalisations (i).

b) On compare température $t(i)$ des gaz à une première valeur de consigne haute $t_1(i)$ inférieure à $t(i)$. Lorsque une — au moins — des températures mesurées devient égale ou inférieure à $t_1(i)$, ce qui correspond à l'ouverture d'au moins un capot de la cuve, ce franchissement du seuil $t_1(i)$ commande le passage en suraspiration.

c) On continue à mesurer en permanence chaque température de gaz $t(i)$ dans chacune des n canalisations (i) et on la compare à une seconde valeur de consigne basse $t'_1(i)$, inférieure ou égale à $t_1(i)$. Lorsque toutes ces températures $t(i)$ mesurées deviennent supérieures à $t'_1(i)$, ce qui correspond au retour à la situation de cuve close, le franchissement de ce seuil $t'_1(i)$ commande le retour au régime d'aspiration normale.

2. Procédé selon revendication 1, caractérisé en ce que le passage de l'aspiration normale à la suraspiration et vice-versa, est obtenu par une modification du débit de gaz dans la canalisation de cuve, commandé par le franchissement des seuils de température $t_1(i)$ et $t'_1(i)$.

3. Procédé selon revendication 2, caractérisé en ce que le rapport du débit de gaz en suraspiration au débit de gaz en aspiration normale est compris entre 1,2 et 4 et, de préférence entre 1,5 et 3.

4. Procédé selon revendication 1 à 3, caractérisé en ce que le franchissement des seuils $t_1(i)$ et $t'_1(i)$ commande en outre le déclenchement d'un signal lumineux et/ou sonore sur un tableau centralisé par groupe de cuves.

5. Procédé selon revendication 1 à 3, caractérisé en ce que le franchissement des seuils $t_1(i)$ et $t'_1(i)$ déclenche un signal qui est envoyé sur un calculateur de contrôle du procédé pour générer et éditer des informations de bilan, de calcul, d'alarme.

6. Dispositif pour la mise en œuvre du procédé de passage automatique en suraspiration des gaz, selon l'une quelconque des revendications 1 à 5, caractérisé en ce qu'il comporte :

un moyen de mesure de la température des gaz $t(i)$ dans chaque canalisation (i),

un moyen de comparaison de $t(i)$ à un premier seuil $t_1(i)$ et à une seconde valeur de consigne $t'_1(i)$,

un moyen de mise en route automatique de la suraspiration lorsque $t(i)$ est égale ou inférieure à $t_1(i)$,

un moyen d'arrêt automatique de la suraspiration lorsque toutes les températures $t(i)$ sont redevenues égales ou supérieures à $t'_1(i)$,

un moyen de contrôle du débit gazeux dans la canalisation de chaque cuve,

un moyen de fixation des valeurs des seuils $t_1(i)$ et $t'_1(i)$.

7. Dispositif, selon revendication 6, caractérisé en ce que le moyen de mesure de la température est un thermocouple (11) disposé dans la canalisation de la cuve.

8. Dispositif selon revendication 6, caractérisé en ce que le moyen de contrôle du débit gazeux est constitué par un volet (17) disposé à l'intérieur de la canalisation, mobile autour d'un axe sensiblement perpendiculaire à l'axe de la canalisation, et passant sensiblement par cet axe.

9. Dispositif, selon revendication 6, caractérisé en ce que le dispositif de contrôle du débit gazeux est constitué par un opercule mobile dans un plan sensiblement perpendiculaire à l'axe de la canalisation.

10. Dispositif, selon revendication 6, caractérisé en ce que le dispositif de contrôle du débit est constitué par un moyen d'étranglement contrôlé d'une portion de la canalisation réalisée en un matériau souple.

**Claims**

1. A process for automatically going into the mode for increased suction extraction of the gases emitted by the tanks of series for the production of aluminium by igneous electrolysis using the Hall-Heroult process, each tank being closed around its periphery by a plurality of removable covers which are disposed in substantially sealed relationship with each other and between each thereof and their support means on the periphery of the tank, the gases being collected over each tank by at least one duct connected to a centralised suction extraction system, characterised in that :

a) the temperature of the gases $t(i)$ is continuously measured in each of the n ducts (i),

b) each gas temperature $t(i)$ is compared to a first upper reference value $t_1(i)$ which is lower than $t(i)$. When one at least of the measured temperatures becomes equal to or less than $t_1(i)$, which corresponds to the opening of at least one cover of the tank, the system goes into the increased suction extraction mode in response to the gas temperature crossing the threshold value $t_1(i)$ ;

c) each gas temperature $t(i)$ in each of the n ducts (i) continues to be continuously measured and is compared to a second lower reference value $t'_1(i)$ which is lower than or equal to $t_1(i)$. When all those measured temperature $t(i)$ reach a value higher than $t'_1(i)$, which corresponds to the return to the tank closed situation, the system returns to the normal suction extraction mode in response to the temperature crossing the threshold value $t'_1(i)$.

2. A process according to claim 1 characterised in that the change from the normal suction extraction mode to the increased suction extraction mode and vice-versa is effected by modifying the gas flow rate in the tank duct, controlled by the temperature crossing the temperature thresholds $t_1(i)$ and $t'_1(i)$.

3. A process according to claim 2 characterized in that the ratio of the gas flow rate in the increased suction extraction mode to the gas flow rate in the normal suction extraction mode is between 1.2 and 4 and preferably between 1.5 and 3.

4. A process according to claims 1 to 3 characterised in that the crossing of the thresholds $t_1(i)$ and $t'_1(i)$ also causes a light and/or acoustic signal to be triggered on a centralised board per group of tanks.

5. A process according to claims 1 to 3 characterised in that the crossing of the thresholds $t_1(i)$ and $t'_1(i)$ triggers a signal which is passed to a computer for controlling the process for generating and editing operational situation, calculation and alarm data.

6. Apparatus for carrying out the process for automatically going into the increased suction extraction mode according to any one of claims 1 to 5 characterised in that it comprises :

a means for measuring the temperature of the gases $t(i)$ in each duct (i),

a means for comparing $t(i)$ to a first threshold $t_1(i)$ and to a second reference value $t'_1(i)$,

a means for automatically starting the increased suction extraction effect when $t(i)$ is equal to or lower than $t_1(i)$,

a means for automatically stopping the increased suction extraction effect when all the temperatures $t(i)$ have again become equal to or higher than $t'_1(i)$,

a means for controlling the gaseous flow rate in the duct of each tank, and

a means for fixing the values of the thresholds $t_1(i)$ and $t'_1(i)$.

7. Apparatus according to claim 6 characterised in that the means for measuring temperature is a thermocouple (11) disposed in the duct of the tank.

8. Apparatus according to claim 6 characterised in that the means for controlling the gaseous flow rate comprises a flap (17) which is disposed within the duct and which is movable about an axis substantially perpendicular to the axis of the duct and passing substantially through said axis.

9. Apparatus according to claim 6 characterised in that the means for controlling the gaseous flow rate comprises a flap member movable in a plane substantially perpendicular to the axis of the duct.

10. Apparatus according to claim 6 characterised in that the means for controlling the flow rate comprises a means for controlled constriction of a portion of the duct which comprises a flexible material.

## Patentansprüche

1. Verfahren zum automatischen Übergang in den Bereich einer Überabsaugung der Gase, die von den Wannen der Gruppen zur Aluminiumerzeugung durch Schmelzflußelektrolyse nach dem Hall-Héroult-Verfahren abgegeben werden, wobei jede Wanne an ihrem Umfang durch eine Mehrzahl von lösbaren Abdeckhauben geschlossen ist, die in praktisch dichter Beziehung untereinander und zwischen jeder von ihnen und ihren Auflagen auf dem Umfang der Wanne angeordnet sind, und wobei die Gase über jeder Wanne durch wenigstens ein Leitungssystem erfaßt werden, das mit einem zentralisierten Absaugsystem verbunden ist, dadurch gekennzeichnet,

a) man ständig die Temperatur der Gase $t(i)$ in jedem der n Leitungssysteme (i) mißt,

b) man jede Temperatur $t(i)$ der Gase mit einem ersten, hohen Einstellwert $t_1(i)$ unter $t(i)$ vergleicht. Wenn — wenigstens — eine der gemessenen Temperaturen gleich oder unter $t_1(i)$ wird, was der Öffnung wenigstens einer Abdeckhaube entspricht, steuert diese Überschreitung der Schwelle $t_1(i)$ den Übergang zur Überabsaugung,

c) man weiter ständig jede Gastemperatur $t(i)$ in jedem der n Leitungssysteme (i) mißt und sie mit einem zweiten, niedrigen Einstellwert $t'_1(i)$ unter oder gleich $t_1(i)$ vergleicht. Wenn alle diese gemessenen Temperaturen $t(i)$ über $t'_1(i)$ werden, was der Rückkehr zur Lage geschlossener Wanne entspricht, steuert die Überschreitung dieser Schwelle $t'_1(i)$ die Rückkehr zum normalen Ansaugbereich.

2. Verfahren nach Anspruch 1, dadurch gekennzeichnet, daß der Übergang vom normalen Absaugen zum Überabsaugen und umgekehrt durch eine Änderung des durch die Überschreitung der Temperaturschwellen $t_1(i)$ und $t'_1(i)$ gesteuerten Gasdurchsatzes im Wannenleitungssystem erhalten wird.

3. Verfahren nach Anspruch 2, dadurch gekennzeichnet, daß das Verhältnis des Gasdurchsatzes beim Überabsaugen zum Gasdurchsatz beim normalen Absaugen im Bereich von 1,2 bis 4 und vorzugsweise von 1,5 bis 3 liegt.

4. Verfahren nach Anspruch 1 bis 3, dadurch gekennzeichnet, daß die Überschreitung der Schwellen

$t_1(i)$ und $t'_1(i)$ außerdem die Auslösung eines Licht- und/oder Schallsignals auf einer je Wannengruppe zentralisierten Tafel steuert.

5. Verfahren nach Ansprüchen 1 bis 3, dadurch gekennzeichnet, daß die Überschreitung der Schwellen $t_1(i)$ und $t'_1(i)$ ein Signal auslöst, das einem Rechner zum Steuern des Verfahrens zur Erzeugung und Abgade der Bilanz-, Rechnungs- und Alarminformationen zugeführt wird.

6. Vorrichtung zur Durchführung des Verfahrens zum automatischen Übergang zur Überabsaugung der Gase nach irgendeinem der Ansprüche 1 bis 5, dadurch gekennzeichnet, daß sie aufweist :
ein Mittel zum Messen der Temperatur der Gase $t(i)$ in jedem Leitungssystem $(i)$,
ein Mittel zum Vergleich von $t(i)$ mit einer ersten Schwelle $t_1(i)$ und einem zweiten Einstellwert $t'_1(i)$,
ein Mittel zur automatischen Ingangsetzung der Überabsaugung, wenn $t(i)$ gleich oder unter $t_1(i)$ ist,
ein Mittel zur automatischen Unterbrechung der Überabsaugung, wenn alle Temperaturen $t(i)$ wieder gleich oder über $t'_1(i)$ geworden sind,
ein Mittel zum Steuern des Gasdurchsatzes im Leitungssystem jeder Wanne und
ein Mittel zur Festlegung der Werte der Schwellen $t_1(i)$ und $t'_1(i)$.

7. Vorrichtung nach Anspruch 6, dadurch gekennzeichnet, daß das Mittel zum Messen der Temperatur ein im Leitungssystem der Wanne angeordnetes Thermoelement (11) ist.

8. Vorrichtung nach Anspruch 6, dadurch gekennzeichnet, daß das Mittel zum Steuern des Gasdurchsatzes aus einer Klappe (17) besteht, die im Inneren des Leitungssystems um eine zur Achse des Leitungssystems praktisch senkrechte und praktisch durch dieser Achse verlaufende Achse beweglich angeordnet ist.

9. Vorrichtung nach Anspruch 6, dadurch gekennzeichnet, daß die Einrichtung zum Steuern des Gasdurchsatzes aus einem in einer zur Achse des Leitungssystems praktisch senkrechten Ebene beweglichen Innenhütchen besteht.

10. Vorrichtung nach Anspruch 6, dadurch gekennzeichnet, daß die Einrichtung zum Steuern des Gasdurchsatzes aus einem Mittel zum gesteuerten Verengen eines Teils des Leitungssystems besteht, der aus einem flexiblen Werkstoff hergestellt ist.

**FIG.1**

**FIG.2**